# FASCICULE DE BREVET EUROPEEN

(11) **EP 1 225 458 B1**
(45) Date de publication et mention de la délivrance du brevet: **26.07.2006**
(21) Numéro de dépôt: 01400170.5
(22) Date de dépôt: 19.01.2001
(51) Int. Cl.: G02B 6/12, G02B 6/10

(54) **Procédé de fabrication d'un composant guide d'ondes à plusieurs couches empilées sur un substrat et composant guide d'ondes obtenu selon ce procédé**
Verfahren zur Herstellung einer Wellenleiterkomponente mit mehreren Schichten auf einem Substrat und damit versehene Komponente
Method for the manufacturing of a multilayer guided-wave device on a substrate, and guided-wave device obtained therewith

(43) Date de publication de la demande: 24.07.2002
(73) Titulaire: CENTRE NATIONAL DE LA RECHERCHE SCIENTIFIQUE (CNRS), 75794 Paris Cedex 16 (FR); Université de Montpellier, 34095 Montpellier Cedex 5 (FR)
(72) Inventeur: Etienne, Pascal, 34160 Castries (FR)
(74) Mandataire: Berger, Helmut

(56) Documents cités:
- US-A- 5 841 928
- US-A- 6 054 253
- COUDRAY P ET AL: "Sol-gel channel waveguide on silicon: fast direct imprinting and low cost fabrication" OPTICS COMMUNICATIONS,NL,NORTH-HOLLAND PUBLISHING CO. AMSTERDAM, vol. 143, no. 4-6, 15 novembre 1997 (1997-11-15), pages 199-202, XP004099799 ISSN: 0030-4018
- NAJAFI S I ET AL: "SOL-GEL GLASS WAVEGUIDE AND GRATING ON SILICON" JOURNAL OF LIGHTWAVE TECHNOLOGY,US,IEEE. NEW YORK, vol. 16, no. 9, 1 septembre 1998 (1998-09-01), pages 1640-1646, XP000786637 ISSN: 0733-8724
- NAJAFI S I ET AL: "Organoaluminophosphate sol-gel silica glass thin films for integrated optics" THIN SOLID FILMS,CH,ELSEVIER-SEQUOIA S.A. LAUSANNE, vol. 307, no. 1-2, 10 octobre 1997 (1997-10-10), pages 203-207, XP004109339 ISSN: 0040-6090

## Description

L'invention concerne un procédé de fabrication d'un composant guide d'ondes à plusieurs couches empilées sur un substrat en silicium, et un composant guide d'ondes, tels que décrits dans les préambules des revendications 1 et 12.

On connaît déjà des composants de ce type, comme par exemple le guide d'onde connu de la demande de brevet n°US-A-5841928, dans lequel les couches sont obtenues par oxydation et par hydrolyse thermique, ce qui constitue un procédé complexe induisant un coût de fabrication élevé.

L'invention a pour but de proposer un procédé et un guide d'ondes ne présentant pas les inconvénients ci-dessus.

Pour atteindre ce but, l'invention propose un procédé et un dispositif ayant les caractéristiques énoncées dans les parties caractérisantes des revendications 1 et 12.

D'autres caractéristiques de l'invention sont indiquées dans les revendications dépendantes.

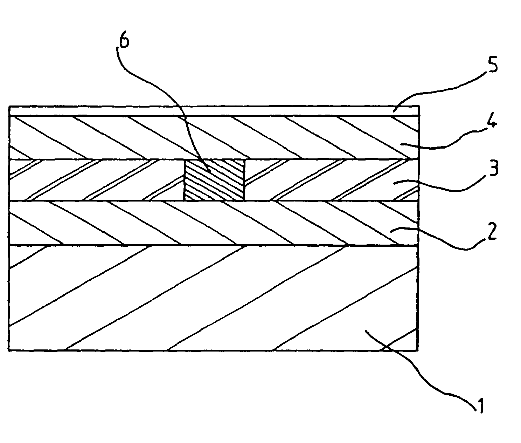

L'invention sera mieux comprise, et d'autre buts, caractéristiques, détails et avantages de celle-ci apparaîtront plus clairement au cours de la description explicative qui va être faite en référence à la figure schématique unique annexée donnée uniquement à titre d'exemple illustrant un mode de réalisation de l'invention.

Comme l'illustre la figure unique, un composant guide d'ondes selon l'invention comporte essentiellement un substrat en silicium 1 sur lequel est réalisé un empilement comportant, successivement de bas en haut, une première couche tampon 2, une couche guidante 3 destinée à accueillir un dispositif guide d'ondes 6, une seconde couche tampon 4 et une couche extérieure supérieure de protection 5.

La première couche tampon 2 a pour fonction d'isoler le dispositif guide d'ondes du substrat en silicium 1 dont l'indice de réfraction très grand par rapport à celui de la couche guidante entraînerait des fortes pertes par des modes radiatifs.

Le matériau de cette couche tampon, comme celui des autres couches est un hybride organique-inorganique dont la composition est choisie pour avoir les propriétés notamment d'isolation, d'écart d'indice et de résistance mécanique souhaités. La technologie mise en oeuvre utilise la méthode sol-gel pour effectuer un dépôt solide sur un substrat solide tel que le silicium, à partir de précurseurs en phase liquide. Selon cette technologie, on immerge le substrat de silicium dans la solution des précurseurs liquides. En le retirant à vitesse constante de la solution, on obtient une couche liquide sur le substrat. La couche liquide est ensuite solidifiée par chauffage.

Dans le cadre de l'invention, la solution à partir de laquelle la première couche tampon 2 est réalisée contient deux précurseurs organique-inorganique : le 3-(Trimethoxysilyl)propyl methacrylate (MAPTMS) et le produit de la réaction entre le n-propoxyde de zirconium et l'acide méthacrylique (Zr(OPr)₄:MAA). Tous deux sont capables de former à la fois un réseau organique et un réseau minéral. Dans le cas de la couche tampon, on réalise seulement un réseau minéral par hydrolyse et polycondensation des groupements alcoxydes.

La couche tampon 2 est séchée à une température comprise entre 90 et 120°C, avantageusement à 100°C, pendant 15 minutes à une heure, avantageusement 30 minutes.

Pour la réalisation de la couche guidante 3, on utilise la même solution que pour la couche tampon, mais on ajoute 2,5 % en masse de MAPTMS+MAA de photoinitiateur. La couche guidante est déposée sur la première couche tampon 2 selon la même technique du trempage-tirage que cette couche tampon.

La couche guidante est ensuite séchée à une température comprise entre 60°C et 80°C, avantageusement à 60°C, pendant une durée de temps de 10 à 45 minutes, avantageusement de 30 minutes.

La seconde couche tampon 4 est réalisée à partir de la même solution que la première couche tampon 2 et la couche guidante 3, sans ajout d'un photoinitiateur. La couche est déposée à nouveau selon la technique du trempage-tirage sur la couche guidante et est ensuite séchée à une température comprise entre 60° et 80°C, avantageusement à 60°C pendant une durée de temps de 10 à 45 minutes, avantageusement de 30 minutes.

Sur cette couche tampon 4 est déposée la couche de protection 5 qui est une couche hydrophobe et anti-rayures pour protéger le composant vis-à-vis des agressions extérieures. Elle doit être transparente aux UV. Il est avantageux de choisir pour sa réalisation un précurseur organominéral donnant une couche très résistante et très inerte vis-à-vis de l'environnement, comme le triméthoxysilane. Celui-ci est simplement hydrolysé par une solution acqueuse d'HCl 0,01N. Après le dépôt de la couche de protection, on sèche celle-ci à une température de 60°C pendant un durée de 20 à 45 minutes, avantageusement de 30 minutes.

Après l'empilement des couches, celui-ci est insolé à travers un masque posé sur la couche de protection par un rayonnement UV, avantageusement d'une longueur d'onde de 325nm pendant quelques secondes jusqu'à quelques minutes selon le photoamorceur utilisé. Avant cet insolation les couches tampons et la couche guidante avaient le même indice de réfraction. Mais pendant cette insolation, il se forme dans la couche guidante sous l'action du rayonnement, dans les zones irradiées, un réseau organique par polymérisation. Les zones une fois polymérisées possèdent un indice de réfraction supérieure à celui du matériau qui les entourent. Les zones irradiées constituent ainsi un dispositif guide d'ondes 6 dans la couche guidante.

Ensuite, l'empilement est stabilisé grâce à un traitement thermique à une température comprise entre 100°C à 120°C, avantageusement à 100°C, pendant une durée de temps de 20 à 45 minutes, avantageusement de 30 minutes. Le réseau minéral est alors suffisamment réticulé pour rendre inactive une nouvelle irradiation aux UV, telle que par exemple par la lumière solaire.

Selon la composition choisie, la dimension transverse du guide et les conditions d'exposition au rayonnement, c'est-à-dire la durée et l'intensité, il est possible de réaliser des composants adaptés pour des longueurs d'ondes allant du visible jusqu'à notamment 1,55 µm.

Dans ce mode de réalisation, l'insolation est faite après le dépôt de toutes les couches. Elle peut aussi être réalisée non pas par insolation sous forme d'un rayonnement UV en utilisant un masque, mais directement grâce à un Laser. C'est par cette insolation UV ou Laser que se produit une polymérisation dans la couche guidante provoquant le changement d'indice qui permet la création de guides d'ondes dans les parties insolées.

Selon un autre mode de réalisation de l'invention, la couche guidante est insolée immédiatement après son dépôt afin de rendre les parties insolées résistantes au solvant. On procède ensuite à une dissolution des parties non insolées par un solvant alcoolique, avantageusement du batanol 1, selon le principe de la photolithographie UV. On procède ensuite au dépôt de la seconde couche tampon et de la couche de protection.

On pourrait encore effectuer l'insolation après dépôt de la seconde couche tampon.

L'insolation à travers la couche tampon permet d'éviter l'opération de gravure et donc de simplifier le procédé de fabrication du composant. L'absence de gravure évite une perte de définition que celle-ci occasionnerait. Puisqu'il n'y a pas de gravure, il n'y a pas de rugosité de surface des guides qui intervient de façon très importante sur les pertes de propagation par diffusion.

Il est à noter que, dans le procédé selon l'invention, il est très important que les couches 3, 4 et 5 n'aient subies qu'un séchage partiel. Dans le cas contraire toute insolation future ne permettrait pas la fabrication de guides d'ondes de qualité satisfaisante car la polymérisation du réseau organique ne serait pas suffisante.

Grâce au procédé qui vient d'être décrit, le composant selon l'invention présente une structure symétrique de sorte que le milieu autour des guides d'ondes réalisés dans la couche guidante présente le même indice de réfraction. Le dépôt d'une seconde couche tampon sur la couche guide d'ondes qui est alors prise en sandwich entre deux couches tampon isolantes identiques permet la réalisation de composants à plusieurs couches guide d'ondes les unes au dessus des autres ou d'autres composants d'une configuration complexe d'une haute densité d'intégration.

## Revendications

1. Procédé de fabrication d'un composant guide d'ondes à plusieurs couches empilées sur un substrat en silicium, du type comprenant une couche tampon (2) déposée sur ledit substrat, une couche guidante (3) déposée sur la couche tampon et permettant la réalisation d'un dispositif guide d'ondes, une couche supplémentaire (4) déposée sur la couche guidante (3) de façon à obtenir le même indice de réfraction autour du dispositif guide d'ondes réalisé dans la couche guidante (3), **caractérisé en ce que** l'on réalise une couche extérieure de protection vis-à-vis des agressions extérieures, et que l'on réalise la couche tampon (2), la couche guidante (3) et la couche supplémentaire (4) en un hybride organique-inorganique selon la méthode sol-gel, et **en ce que** l'on utilise pour la réalisation de la couche supplémentaire (4) la même solution que pour la couche tampon (2), pour obtenir une structure symétrique par rapport à la couche guidante (3), dans laquelle la couche tampon (2) et la couche supplémentaire (4) ont le même indice de réfraction.

2. Procédé selon la revendication 1, **caractérisé en ce que** le dispositif guide d'ondes est realisé dans la couche guidante (3) par exposition des zones de cette couche devant constituer le dispositif guide d'ondes à un rayonnement ultraviolet ou laser à travers la couche supplémentaire (4) deposé sur la couche guidante (3).

3. Procédé selon la revendication 2, **caractérisé en ce que** l'exposition au rayonnement ultraviolet est faite après la réalisation de la couche de protection (5).

4. Procédé selon l'une des revendications 1 à 3, **caractérisé en ce que** la couche guidante (3) est réalisée à partir de la même solution que les couches tampons (2) et (4), après ajout d'un photoinitiateur.

5. Procédé selon l'une des revendications 1 à 4, **caractérisé en ce que** la première couche tampon (2) sur le substrat (1) est séchée après son dépôt à une température comprise entre 90 et 120°C, avantageusement à 100°C, pendant une durée de temps de 15 minutes à une heure, avantageusement de 30 minutes.

6. Procédé selon l'une des revendications 1 à 5, **caractérisé en ce que** la couche guidante (3), après son dépôt, est séchée à une température comprise entre 60 à 80°C, avantageusement à 60°C, pendant une durée de temps de 10 à 45 minutes, avantageusement de 30 minutes.

7. Procédé selon l'une des revendications 1 à 6, **caractérisé en ce que** la couche isolante (4) déposée sur la couche guidante (3) est séchée après son dépôt à une température comprise entre 60 et 80°C avantageusement à 60°C, pendant une durée de temps de 20 à 45 minutes, avantageusement de 30 minutes.

8. Procédé selon l'une des revendications 1 à 7, **caractérisé en ce que** la couche de protection, après son dépôt est séchée à une température avantageusement de 60°C, pendant une durée de temps de 20 à 45 minutes, avantageusement de 30 minutes.

9. Procédé selon l'une des revendications 4 à 8, **caractérisé en ce que** l'on utilise un rayonnement ultra violet ayant une longueur d'onde avantageusement de 325nm, le rayonnement étant fait avantageusement pendant une durée de quelques secondes à quelques minutes selon le photoinitiateur utilisé.

10. Procédé selon l'une des revendications 1 à 9, **caractérisé en ce que** le composant, après l'insolation par un rayonnement ultraviolet, est recuit à une température comprise entre 100 à 120°C, avantageusement à 100°C, pendant une durée de temps de 20 à 45 minutes, avantageusement de 30 minutes.

11. Procédé selon la revendication 1, **caractérisé en ce que** la couche guidante (3) est insolée immédiatement après son dépôt par un rayonnement ultraviolet ou laser, que les parties non isolées sont ensuite dissoutes et **en ce que** la couche supplémentaire est déposée sur la couche guidante après la dissolution des parties non insolées.

12. Composant guide d'ondes à plusieurs couches empilées sur un substrat en silicium, du type comprenant une couche tampon (2) déposée sur ledit substrat, une couche guidante (3) déposée sur la couche tampon et permettant la réalisation d'un dispositif guide d'ondes, une couche supplémentaire (4) déposée sur la couche guidante (3) de façon à obtenir le même indice de réfraction autour du dispositif guide d'ondes réalisé dans la couche guidante (3), et **caractérisé, en ce que** la couche tampon (2), la couche guidante (3) et la couche supplémentaire (4) sont constituées d'un hybride organique-inorganique réalisé selon la méthode sol-gel, **en ce que** la couche supplémentaire (4) a la même composition que la première couche tampon (2), et **en ce que** la structure est symétrique par rapport à la couche guidante (3), la couche tampon (2) et la couche supplémentaire (4) ayant le même indice de réfraction, et **en ce qu'**une couche extérieure de protection vis-à-vis des agressions extérieures est réalisée.

## Claims

1. A method of fabricating a waveguide component comprising a plurality of stacked layers on a silicon substrate, including a buffer layer (2) deposited on said substrate, a guide layer (3) for producing a waveguide device deposited on the buffer layer, and a supplementary layer (4) deposited on the guide layer (3) to obtain the same refractive index around the waveguide device produced in the guide layer (3), **characterised in that** an external layer is produced for protection against external attack, the buffer layer (2), the guide layer (3) and the supplementary layer (4) are made from an organic-inorganic hybrid by the sol-gel process, and the same solution is used to produce the supplementary layer (4) and the buffer layer (2) in order to produce a structure that is symmetrical with respect to the guide layer (3) and wherein the buffer layer (2) and the supplementary layer (4) have the same refractive index.

2. A method according to claim 1, **characterised in that** the waveguide device is produced in the guide layer (3) by exposing regions of that layer adapted to constitute the waveguide device to ultraviolet or laser radiation via the supplementary layer (4) deposited on the guide layer (3).

3. A method according to claim 2, **characterised in that** the exposure to ultraviolet radiation is effected after producing the protection layer (5).

4. A method according to any one of claims 1 to 3, **characterised in that** the guide layer (3) is made from the same solution as the buffer layers (2) and (4) after adding a photo-initiator.

5. A method according to any one of claims 1 to 4, **characterised in that** the first buffer layer (2) on the substrate (1) is dried after it is deposited at a temperature from 90 to 120°C, advantageously at 100°C, for a time period from 15 minutes to one hour, advantageously for 30 minutes.

6. A method according to any one of claims 1 to 5, **characterised in that** the guide layer (3), after it is deposited, is dried at a temperature from 60 to 80°C, advantageously at 60°C, for a time period from 10 to 45 minutes, advantageously for 30 minutes.

7. A method according to any one of claims 1 to 6, **characterised in that** the insulative layer (4) deposited on the guide layer (3) is dried after it is deposited at a temperature 60 to 80°C, advantageously at 60°C, for a time period from 20 to 45 minutes, advantageously for 30 minutes.

8. A method according to any one of claims 1 to 7, **characterised in that** the protection layer is advantageously dried after it is deposited at a temperature of 60°C for a time period from 20 to 45 minutes, advantageously for 30 minutes.

9. A method according to any one of claims 4 to 8, **characterised in that** it uses ultraviolet radiation advantageously having a wavelength of 325 nm, irradiation advantageously being effected for a time period from a few seconds to a few minutes depending on the photo-initiator used.

10. A method according to any one of claims 1 to 9, **characterised in that** the component is annealed after exposure to ultraviolet radiation at a temperature from 100 to 120°C, advantageously at 100°C, for a time period from 20 to 45 minutes, advantageously for 30 minutes.

11. A method according to claim 1, **characterised in that** the guide layer (3) is exposed to ultraviolet or laser radiation immediately after it is deposited, the unexposed portions are then dissolved, and the supplementary layer is deposited on the guide layer after the unexposed portions have been dissolved.

12. A waveguide component comprising a plurality of stacked layers on a silicon substrate, including a buffer layer (2) deposited on said substrate, a guide layer (3) for producing a waveguide device deposited on the buffer layer, and a supplementary layer (4) for obtaining the same refractive index around the waveguide device produced in the guide layer (3) deposited on the guide layer (3), **characterised in that** the buffer layer (2), the guide layer (3) and the supplementary layer (4) consist of an organic-inorganic hybrid produced by the sol-gel process, the supplementary layer (4) has the same composition as the first buffer layer (2), the structure is symmetrical with respect to the guide layer (3), the buffer layer (2) and the supplementary layer (4) having the same refractive index, and an external layer for protection against external attack is produced.

## Patentansprüche

1. Verfahren zum Herstellen eines Wellenleiterbauteils mit mehreren auf einem Substrat aus Silizium gestapelten Schichten, vom Typ mit einer Pufferschicht (2), die auf das Substrat aufgebracht ist, einer Leiterschicht (3), die auf die Pufferschicht aufgebracht wird und die Ausbildung einer Wellenleitervorrichtung gestattet, einer zusätzlichen Schicht (4), die auf die Leiterschicht (3) aufgebracht wird, so dass der gleiche Brechungsindex um die in der Leiterschicht (3) ausgebildete Wellenleitervorrichtung erhalten wird, **dadurch gekennzeichnet, dass** eine Außenschicht zum Schutz vor äußeren Einwirkungen ausgebildet wird und die Pufferschicht (2), die Leiterschicht (3) und die zusätzliche Schicht (4) aus einem organischen/anorganischen Hybrid nach der Sol-Gel-Methode ausgebildet wird, und dass zum Ausbilden der zusätzlichen Schicht (4) die gleiche Lösung wie für die Pufferschicht (2) verwendet wird, um eine zur Leiterschicht (3) symmetrische Struktur zu erhalten, bei welcher die Pufferschicht (2) und die zusätzliche Schicht (4) den gleichen Brechungsindex haben.

2. Verfahren nach Anspruch 1, **dadurch gekennzeichnet, dass** die Wellenleitervorrichtung **dadurch** in der Leiterschicht (3) ausgebildet wird, dass Bereiche dieser Schicht, welche die Wellenleitervorrichtung bilden soll, einer ultravioletten Strahlung bzw. Laserstrahlung durch die auf die Leiterschicht (3) aufgebrachte zusätzliche Schicht (4) hindurch ausgesetzt werden.

3. Verfahren nach Anspruch 2, **dadurch gekennzeichnet, dass** das Aussetzen der ultravioletten Strahlung nach der Ausbildung der Schutzschicht (5) erfolgt.

4. Verfahren nach einem der Ansprüche 1 bis 3, **dadurch gekennzeichnet, dass** die Leiterschicht (3) aus der gleichen Lösung wie die Pufferschichten (2) und (4) nach Zugabe eines Photoinitiators ausgebildet wird.

5. Verfahren nach einem der Ansprüche 1 bis 4, **dadurch gekennzeichnet, dass** die erste Pufferschicht (2) auf dem Substrat (1) nach deren Auftragen bei einer Temperatur zwischen 90 und 120°C, vorteilhaft 100°C für eine Zeitdauer von 15 Minuten bis eine Stunde, vorteilhaft 30 Minuten lang getrocknet wird.

6. Verfahren nach einem der Ansprüche 1 bis 5, **dadurch gekennzeichnet, dass** die Leiterschicht (3) nach deren Auftragen bei einer Temperatur zwischen 60 und 80°C, vorteilhaft 60°C für eine Zeitdauer von 10 bis 45 Minuten, vorteilhaft 30 Minuten lang getrocknet wird.

7. Verfahren nach einem der Ansprüche 1 bis 6, **dadurch gekennzeichnet, dass** die auf die Leiterschicht (3) aufgetragene Isolierschicht (4) nach deren Auftragen bei einer Temperatur zwischen 60 und 80°C, vorteilhaft 60°C für eine Zeitdauer von 20 bis 45 Minuten, vorteilhaft 30 Minuten lang getrocknet wird.

8. Verfahren nach einem der Ansprüche 1 bis 7, **dadurch gekennzeichnet, dass** die Schutzschicht nach deren Auftragen bei einer Temperatur vorteilhaft von 60°C für eine Zeitdauer von 20 bis 45 Minuten, vorteilhaft 30 Minuten lang getrocknet wird.

9. Verfahren nach einem der Ansprüche 4 bis 8, **dadurch gekennzeichnet, dass** eine Ultraviolettstrahlung mit einer Wellenlänge bevorzugt von 325 nm verwendet wird, wobei die Strahlung bevorzugt für eine Dauer von einigen Sekunden bis einige Minuten je nach verwendeten Photoinitiator erfolgt.

10. Verfahren nach einem der Ansprüche 1 bis 9, **dadurch gekennzeichnet, dass** das Bauteil nach Bestrahlung mit einer Ultraviolettstrahlung bei einer Temperatur zwischen 100 und 120°C, bevorzugt 100°C für eine Zeitdauer von 20 bis 45 Minuten, bevorzugt 30 Minuten lang nachgehärtet wird.

11. Verfahren nach Anspruch 1, **dadurch gekennzeichnet, dass** die Leiterschicht (3) unmittelbar nach deren Auftragen mit einer Ultraviolett- bzw. Laserstrahlung bestrahlt wird, dass die nicht bestrahlten Abschnitte anschließend aufgelöst werden und dass die zusätzliche Schicht nach Auflösung der nicht bestrahlten Abschnitte auf die Leiterschicht aufgebracht wird.

12. Wellenleiterbauteil mit mehreren auf einem Substrat aus Silizium gestapelten Schichten, vom Typ mit einer Pufferschicht (2), die auf das Substrat aufgebracht ist, einer Leiterschicht (3), die auf die Pufferschicht aufgebracht ist und die Ausbildung einer Wellenleitervorrichtung gestattet, einer zusätzlichen Schicht (4), die auf die Leiterschicht (3) aufgebracht ist, so dass der gleiche Brechungsindex um die in der Leiterschicht (3) ausgebildete Wellenleitervorrichtung erhalten wird, **dadurch gekennzeichnet, dass** die Pufferschicht (2), die Leiterschicht (3) und die zusätzliche Schicht (4) aus einem organischen/anorganischen Hybrid bestehen, der nach der Sol-Gel-Methode ausgebildet ist, dass die zusätzliche Schicht (4) die gleiche Zusammensetzung hat wie die erste Pufferschicht (2), und dass die Struktur symmetrisch zur Leiterschicht (3) ist, wobei die Pufferschicht (2) und die zusätzliche Schicht (4) den gleichen Brechungsindex haben, und dass eine Außenschicht zum Schutz vor äußeren Einwirkungen ausgebildet ist.
